# EUROPÄISCHE PATENTSCHRIFT

(11) **EP 2 730 022 B1**
(45) Veröffentlichungstag und Bekanntmachung des Hinweises auf die Patenterteilung: **29.04.2015**
(21) Anmeldenummer: 11731329.6
(22) Anmeldetag: 07.07.2011
(51) Int. Cl.: H02P 6/14, H02P 6/18, H02P 25/02

(54) **VERFAHREN ZUR ELEKTRONISCHEN KOMMUTIERUNG IN GLEICHSTROM-ELEKTROMOTOREN**
METHOD FOR THE ELECTRONIC COMMUTATION IN ELECTRIC DC MOTORS
PROCEDE DE COMMUTATION ÉLECTRONIQUE EN MOTEURS ELECTRIQUES DC

(43) Veröffentlichungstag der Anmeldung: 14.05.2014
(73) Patentinhaber: Robert Bosch GmbH, 70442 Stuttgart (DE)
(72) Erfinder: MUELLER, Andreas, 71735 Eberdingen (DE); DWERTMANN, Ingo, 76137 Karlsruhe (DE)
(86) Internationale Anmeldenummer: PCT/EP2011/061504
(87) Internationale Veröffentlichungsnummer: WO 2013/004311

(56) Entgegenhaltungen:
- EP-A2- 2 037 567
- CN-A- 101 699 757
- US-A- 5 929 577
- US-A1- 2008 252 240

## Beschreibung

Die Erfindung bezieht sich auf ein Verfahren zur elektronischen Kommutierung in Gleichstrom-Elektromotoren nach dem Oberbegriff des Anspruches 1.

### Stand der Technik

Bei elektronisch kommutierten Gleichstrom-Elektromotoren wird das für die Drehbewegung erforderliche magnetische Drehfeld von einer geeigneten Elektronik gesteuert. Die exakten Zeitpunkte der Kommutierung sind von der Rotorposition des Motors abhängig, die entweder mit Sensoren erfasst oder durch Messung der Gegeninduktionsspannung (Back-EMF) der jeweils nicht bestromten Phase bestimmt wird. Die sensorlose Kommutierungserkennung kann durch Verwendung von Komparatoren zur Detektierung der Nulldurchgänge der induzierten Spannung und Auswertung der Komparatorsignale durchgeführt werden. Bekannt ist es auch, die induzierte Spannung direkt zu messen und die Messwerte mit einer Schwelle um den Nulldurchgang zu vergleichen.

Aus der DE 10 2005 006 503 A1 ist ein Verfahren zur Messung der Stromaufnahme eines aus einem Gleichspannungsnetz gespeicherten, durch Pulsweitenmodulation (PWM) gesteuerten Elektromotors bekannt. Eine PWM-Steuereinheit liefert pulsweitenmodulierte Spannungs-Steuersignale für eine Halbleiterschaltvorrichtung, über die der Stromfluss im Elektromotor gesteuert wird. An einem der Halbleiterschaltvorrichtung in Reihe geschalteten Messwiderstand wird der Spannungsabfall erfasst, aus dem auf den Motorstrom geschlossen wird.

Aus der EP 2 037 567 A2 ist es bekannt, die Frequenz, die Amplitude oder die Form der Bestromung eines Gleichstrom-Elektromotors als Reaktion auf den Nulldurchgang der Gegeninduktionsspannung zu variieren. Der Nulldurchgang der Gegeninduktionsspannung wird mittels einer linearen Interpolation bestimmt.

### Offenbarung der Erfindung

Der Erfindung liegt die Aufgabe zugrunde, mit einfachen Maßnahmen ein Verfahren zur elektronischen Kommutierung in Gleichstrom-Elektromotoren zu verbessern. Es soll insbesondere die sensorlose Kommutierungserkennung unabhängig vom realen Nulldurchgang der induzierten Spannung sein. Gemäß eines weiteren Aspektes soll die Bestromungspause zwischen den periodisch aufeinander folgenden, positiven oder negativen Stromwerten der Bestromung minimiert werden.

Diese Aufgabe wird erfindungsgemäß mit den Merkmalen des Anspruches 1 gelöst. Die Unteransprüche geben zweckmäßige Weiterbildungen an.

Bei dem verbesserten Verfahren zur elektronischen Kommutierung werden die Gleichstrom-Elektromotoren durch Pulsweitenmodulation (PWM) der Bestromung gesteuert, welche periodisch mit positiven und negativen Stromwerten und zwischenliegenden Bestromungspausen erfolgt. Die induzierte Spannung (Gegeninduktionsspannung bzw. Back-EMF) wird PWM-synchron gemessen. Der Nulldurchgang der Gegeninduktionsspannung wird über den Schnittpunkt einer Einhüllenden, welche an die Gegeninduktionsspannung gelegt wird, mit der Nulllinie bestimmt. Je nach Position des Nulldurchgangs der Gegeninduktionsspannung wird die Pulsweitenmodulation der Bestromung verändert, und zwar in den Fällen, in denen der Nulldurchgang entweder von den positiven oder von den negativen Stromwerten der Bestromung überdeckt wird.

In diesem Zusammenhang bedeutet Nulldurchgang nicht notwendigerweise ein Nullpotenzial, sondern schließt auch den Durchgang der induktiven Spannung durch Mittelpotenziale ein, beispielsweise im Fall von drei Strangspannungen in Form eines Sterns das jeweilige Mittelpotenzial des Sternpunktes, welches üblicherweise der halben Versorgungsspannung entspricht.

Der grundsätzliche Verlauf der induzierten Spannung des Motors ist bekannt, er ändert sich insbesondere zumindest näherungsweise geradlinig, so dass auch die Einhüllende an die Gegeninduktionsspannung zumindest näherungsweise eine Gerade ist. Aus dem grundsätzlich bekannten Verlauf der Induktionsspannung kann daher auf den Nulldurchgang geschlossen werden, auch wenn dieser von den positiven oder negativen Stromwerten der Bestromung überdeckt wird und somit nicht direkt messbar ist. Aus der PWM-synchron gemessenen Gegeninduktionsspannung können die Parameter der Einhüllenden bestimmt werden, aus der durch Extrapolation der Nulldurchgang festgestellt werden kann. Die Einhüllende ist bevorzugt eine Gerade, wobei grundsätzlich auch nicht-lineare Funktionen in Betracht kommen.

Diese Vorgehensweise hat den Vorteil, dass ein genaues Ausmessen des Nulldurchgangs der induzierten Spannung nicht zwingend erforderlich ist. Es genügt, lediglich in einem kleinen Teilbereich den Verlauf der induzierten Spannung zu messen, insbesondere über einen Teilbereich in der Bestromungslücke, und daraus über die Extrapolation der Einhüllenden den Nulldurchgang zu bestimmen. Auf diese Weise kann die Bestromungslücke, die prinzipiell zur Erkennung des Nulldurchgangs nötig ist, wesentlich verkürzt werden, was positive Auswirkungen auf Geräusch und Leistungen hat.

Ein weiterer Vorteil liegt darin, dass das Verfahren im Vergleich zu Ausführungen aus dem Stand der Technik wesentlich robuster ist, da ein Ausbleiben einer Kommutierungsflanke nicht automatisch zum Verlust der Kommutierung selbst führt.

Der Nulldurchgang wird im Falle einer Ausführung der Einhüllenden als Gerade zweckmäßigerweise aus dem Gradienten der Gerade bestimmt. Aus dem Nulldurchgang bzw. dem Gradienten kann darüber hinaus die Motordrehzahl und der Rotorwinkel bestimmt werden.

Wird festgestellt, dass der Nulldurchgang von der vorhergehenden Bestromung verdeckt wird, so erfolgt die Bestromung verglichen mit der Motordrehzahl zu langsam. Um die Bestromung, die als Pulsweitenmodulation vorgegeben wird, zu beschleunigen, werden die Inkremente der Pulsweitenmodulation angepasst, um die Bestromung wieder an die Motordrehzahl anzugleichen. Im Fall, dass der Nulldurchgang der induzierten Spannung durch die nachfolgende Bestromung verdeckt wird, erfolgt die Bestromung zu schnell. Auch in diesem Fall wird die Bestromung durch Anpassung der Inkremente an die Motordrehzahl wieder angeglichen.

In beiden Fällen, also sowohl bei zu langsamer als auch bei zu schneller Bestromung, wird durch die Anpassung erreicht, dass der Nulldurchgang der induzierten Spannung in der Mitte der Bestromungspause liegt. Die Anpassung erfolgt durch Veränderung der Breite der Pulsweitenmodulation.

Gemäß einer weiteren vorteilhaften Ausführung ist vorgesehen, dass das Verfahren bei Mehrphasenstrom angewandt wird, wobei in diesem Fall die Messung der Gegeninduktionsspannung erst erfolgt, wenn der Strom in der betrachteten Phase einen Grenzwert unterschreitet. Hintergrund ist, dass mittels des PWM-Verlaufs der Strom in der jeweiligen Phase vorteilhafterweise nahezu abgebaut sein soll, bevor die Messung der induzierten Spannung beginnt, da andernfalls die Messung durch den noch fließenden Phasenstrom verfälscht würde.

Der PWM-Verlauf der Bestromung erfolgt beispielsweise sinusförmig, wobei auch rechteckförmige oder trapezförmige oder sonstige Bestromungsformen in Betracht kommen. Die gewünschte Bestromungsform einer Phase wird beispielsweise in einer Tabelle für 180° abgelegt, wobei in jedem PWM-Zyklus mittels eines Zeigers auf die Tabelle ein Wert aus der Tabelle geholt und als Pulsweitenmodulation ausgegeben wird. Durch ein Inkrementieren des Zeigers kann auf die folgenden Tabellenwerte umgeschaltet werden, wobei die Tabelle umso schneller durchfahren wird, je größer das Zeigerinkrement ist. Auf diese Weise ist eine Anpassung an die Motordrehzahl möglich. Mit zunehmender Motorgeschwindigkeit steigt das Zeigerinkrement.

Beim Nulldurchgang der induzierten Spannung wird der Zeiger wieder auf den Beginn der Tabelle gesetzt, wodurch eine Synchronisation mit dem Motor erreicht wird.

Die Motorgeschwindigkeit und damit das Zeigerinkrement wird aus dem Abstand zweier Nulldurchgänge ermittelt. Die Drehzahlstellung kann durch Skalierung der Tabellenwerte bestimmt werden.

Weitere Vorteile und zweckmäßige Ausführungen sind den weiteren Ansprüchen, der Figurenbeschreibung und den Zeichnungen zu entnehmen. Es zeigen:
- Fig. 1: den Verlauf der pulsweitenmodulierten Bestromung eines Gleichstrom-Elektromotors mit elektronischer Kommutierung, wobei in der zwischenliegenden Bestromungspause zwischen positiven und negativen Stromwerten eine PWM-synchron gemessene Gegeninduktionsspannung liegt, die einen Nulldurchgang aufweist,
- Fig. 2: das Detail aus Fig. 1 in vergrößerter Darstellung, mit einer an die Gegeninduktionsspannung angelegten Einhüllenden, die als Gerade ausgeführt ist und aus der der Nulldurchgang bestimmt werden kann,
- Fig. 3: eine Fig. 1 entsprechende Darstellung eines Bestromungsverlaufs, bei der der Nulldurchgang der induzierten Spannung durch die vorhergehende Bestromung verdeckt ist.
- Fig. 4: ein weiterer Bestromungsverlauf, bei dem der Nulldurchgang der induzierten Spannung durch die nachfolgende Bestromung verdeckt ist.

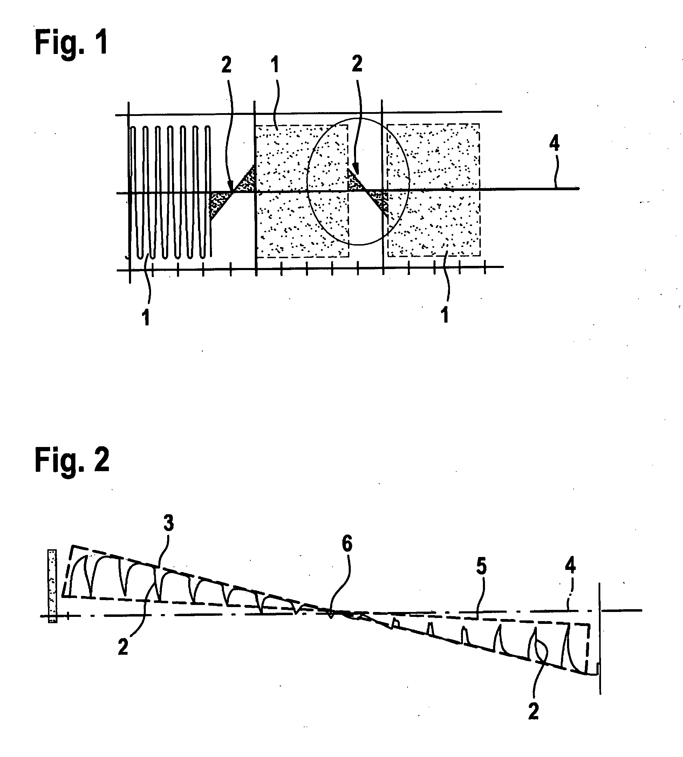

Fig. 1 zeigt den Verlauf der Bestromung eines Gleichstrom-Elektromotors mit elektronischer Kommutierung, bei dem der Nulldurchgang der induzierten Spannung genau in die Bestromungslücke bzw. -pause zwischen den periodisch aufeinander folgenden positiven oder negativen Stromwerten 1 mit Pulsweitenmodulation (PWM) fällt. Bei der induzierten Spannung 2 handelt es sich um die Gegeninduktionsspannung (Back-EMF), die PWM-synchron gemessen wird. Die Messung erfolgt über einen Analog-Digital-Konverter.

Die Bestromung des Gleichstrom-Elektromotors erfolgt über Mehrphasenstrom, der insbesondere über eine Sternschaltung aufgebracht wird, wobei im Ausführungsbeispiel gemäß Fig. 1 bis 4 lediglich eine Phase dargestellt ist. Die Messung der Gegeninduktionsspannung 2 erfolgt erst dann, wenn der Strom in der Phase bereits nahezu abgebaut wurde, so dass der Strom einen Grenzwert unterschreitet. Damit wird vermieden, dass die Messung durch den noch fließenden Phasenstrom verfälscht wird.

Wie der vergrößerten Darstellung der Gegeninduktionsspannung 2 gemäß Fig. 2 zu entnehmen, weist die Gegeninduktionsspannung einen PWM-synchronen Verlauf auf, wobei an den Verlauf eine Einhüllende 3 gelegt werden kann, die eine Gerade bildet und die Nulllinie 4 schneidet. Mit der Nulllinie 4 fällt annähernd eine Gerade 5 zusammen, die gegenüber der Nulllinie um einen kleinen Winkelbetrag geneigt ist und die zweite Einhüllende an den Verlauf der Gegeninduktionsspannung 2 auf der der Einhüllenden 3 gegenüberliegenden Seite bildet. Der Schnittpunkt der ersten Einhüllenden 3 mit der Nulllinie 4 ist zugleich der Schnittpunkt der zweiten Einhüllenden 5 mit der ersten Einhüllenden 3.

Die Einhüllende 3 weist eine Steigung auf, die so bemessen ist, dass der Schnittpunkt 6 der Einhüllenden 3 mit der Nulllinie 4 genau in der Mitte der Bestromungspause zwischen zwei Bestromungsphasen liegt. Dies kennzeichnet den Normalfall, bei dem die Bestromung zur Motordrehzahl passt. Aus dem Gradienten bzw. der Steigung der Einhüllenden 3 können zudem die Motordrehzahl und der Motorwinkel bestimmt werden.

Grundsätzlich genügt es, aus dem in Fig. 2 dargestellten Verlauf der Gegeninduktionsspannung 2 in der Bestromungspause zwischen zwei Bestromungsphasen lediglich einen Teilabschnitt zu messen, so dass die Steigung der Einhüllenden 3 bestimmt werden kann. Bereits wenige Abtastpunkte genügen, um den Nulldurchgang 6 zu bestimmen.

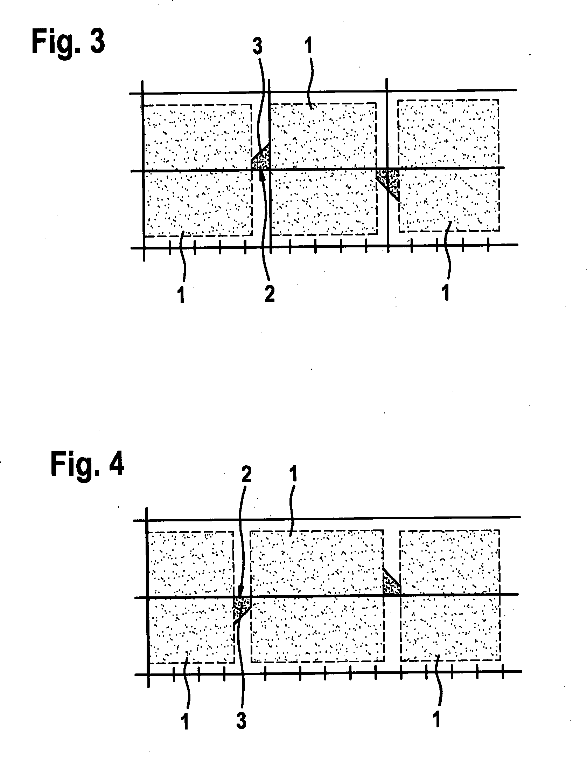

In den weiteren Darstellungen gemäß Fig. 3 und 4 passt die Bestromung nicht zur Motordrehzahl, wobei gemäß Fig. 3 die Bestromung zu langsam und gemäß Fig. 4 die Bestromung zu schnell erfolgt. Dementsprechend ist im Ausführungsbeispiel gemäß Fig. 3 der Nulldurchgang der induzierten Spannung 2 von der vorhergehenden Bestromung verdeckt, wohingegen in Fig. 4 der Nulldurchgang der induzierten Spannung 2 von der nachfolgenden Bestromung verdeckt ist. Aus dem Gradienten der Einhüllenden 3 kann durch lineare Extrapolation trotz der Überdeckung der Nulldurchgang bestimmt werden. Zur Anpassung der Bestromung an die Motordrehzahl wird die Pulsweitenmodulation PWM der Bestromung in der Weise verändert, dass der Nulldurchgang der Gegeninduktionsspannung 2 analog zum Ausführungsbeispiel gemäß Fig. 1 mittig in der Bestromungspause liegt. Dies wird dadurch erreicht, dass die Breite der Pulsweitenmodulation angepasst wird.

## Patentansprüche

1. Verfahren zur elektronischen Kommutierung in Gleichstrom-Elektromotoren, die durch Pulsweitenmodulation (PWM) der Bestromung gesteuert werden, welche periodisch mit positiven und negativen Stromwerten (1) und zwischenliegenden Bestromungspausen erfolgt, wobei in dem Verfahren die Gegeninduktionsspannung (2) PWM-synchron gemessen wird, **dadurch gekennzeichnet, dass** der Nulldurchgang der Gegeninduktionsspannung (2) über den Schnittpunkt der Einhüllenden (3) an die Gegeninduktionsspannung (2) mit der Nulllinie (4) bestimmt wird, wobei für den Fall, dass der Nulldurchgang von positiven oder negativen Stromwerten der Bestromung überdeckt wird, die Pulsweitenmodulation (PWM) der Bestromung in der Weise verändert wird, dass die Einhüllende (3) eine Steigung aufweist, die so bemessen ist, dass der Schnittpunkt (6) der Einhüllenden (3) mit der Nulllinie (4) genau in der Mitte der Bestromungspause zwischen zwei Bestromungsphasen liegt.

2. Verfahren nach Anspruch 1, **dadurch gekennzeichnet, dass** die Einhüllende (3) an die Gegeninduktionsspannung (2) zumindest näherungsweise eine Gerade ist.

3. Verfahren nach Anspruch 2, **dadurch gekennzeichnet, dass** der Nulldurchgang aus dem Gradienten der Geraden (5) bestimmt wird.

4. Verfahren nach Anspruch 3, **dadurch gekennzeichnet, dass** aus dem Nulldurchgang bzw. dem Gradienten die Motordrehzahl und der Rötorwinkel bestimmt werden.

5. Verfahren nach einem der Ansprüche 1 bis 4, **dadurch gekennzeichnet, dass** die Pulsweitenmodulation (PWM) der Bestromung in der Weise verändert wird, dass der Nulldurchgang der Gegeninduktionsspannung (2) mittig in den Bestromungspausen liegt.

6. Verfahren nach einem der Ansprüche 1 bis 5, **dadurch gekennzeichnet, dass** die Breite der Pulsweitenmodulation angepasst wird.

7. Verfahren nach einem der Ansprüche 1 bis 6, **dadurch gekennzeichnet, dass** Mehrphasenstrom verwendet wird und die Messung der Gegeninduktionsspannung (2) erst erfolgt, wenn der Strom in der betrachteten Phase einen Grenzwert unterschreitet.

8. Verfahren nach einem der Ansprüche 1 bis 7, **dadurch gekennzeichnet, dass** die Messung der Gegeninduktionsspannung (2) nur über einen Teilbereich in der Bestromungslücke gemessen wird.

9. Regel- bzw. Steuergerät zur Durchführung des Verfahrens nach einem der Ansprüche 1 bis 8.

10. Elektromotor, insbesondere in einem Fahrzeug bzw. einem Aggregat in eine Fahrzeug , mit einem Regel- bzw. Steuergerät nach Anspruch 9.

## Claims

1. Electronic commutation method in direct current electric motors which are controlled by pulse width modulation (PWM) of the energization which takes place periodically with positive and negative current values (1) and intermediate energization pauses, wherein, in Method, the counter-induction voltage (2) is measured synchronously with the PWM, **characterized in that** the zero crossover of the counter-induction voltage (2) is determined by means of the point of intersection of the envelope (3) of the counter-induction voltage (2) with the zero line (4), wherein, for the case in which the zero crossover is covered by positive or negative current values of the energization, the pulse width modulation (PWM) of the energization is changed in such a way that the envelope (3) has a slope which is calculated so that the point of intersection (6) of the envelope (3) with the zero line (4) lies exactly in the center of the energization pause between two energization phases.

2. Method according to Claim 1, **characterized in that** the envelope (3) of the counter-induction voltage (2) is at least approximately a straight line.

3. Method according to Claim 2, **characterized in that** the zero crossover is determined from the gradient of the straight line (5).

4. Method according to Claim 3, **characterized in that** the motor speed and the rotor angle are determined from the zero crossover or the gradient.

5. Method according to one of Claims 1 to 4, **characterized in that** the pulse width modulation (PWM) of the energization is changed in such a way that the zero crossover of the counter-induction voltage (2) lies centrally in the energization pauses.

6. Method according to one of Claims 1 to 5, **characterized in that** the width of the pulse width modulation is adjusted.

7. Method according to one of Claims 1 to 6, **characterized in that** polyphase current is used and the counter-induction voltage (2) is not measured until the current in the phase under consideration falls below a limit value.

8. Method according to one of Claims 1 to 7, **characterized in that** the counter-induction voltage (2) is only measured over a sub-region in the energization gap.

9. Regulator and control device for carrying out Method according to one of Claims 1 to 8.

10. Electric motor, in particular in a vehicle or in a unit in a vehicle, having a regulator and control device according to Claim 9.

## Revendications

1. Procédé de commutation électronique dans des moteurs électriques à courant continu commandés par modulation de la largeur des impulsions (PWM) de l'alimentation en courant qui s'effectue périodiquement avec des valeurs positives et négatives (1) du courant et des pauses intermédiaires d'alimentation en courant,
la contre-tension d'induction (2) étant mesurée de manière synchronisée sur la PWM dans le procédé, **caractérisé en ce que**
le passage par zéro de la contre-tension d'induction (2) est déterminé par l'intermédiaire du point de concours des enveloppantes (3) de la contre-tension d'induction (2) avec la ligne zéro (4), et au cas où le passage par zéro d'une valeur positive ou d'une valeur négative de l'alimentation en courant est recouvert, la modulation (PWM) de la largeur des impulsions de l'alimentation en courant est modifiée de telle sorte que l'enveloppante (3) présente une pente dimensionnée de telle sorte que le point de concours (6) entre l'enveloppante (3) et la ligne zéro (4) soit situé exactement au milieu de la pause d'alimentation en courant comprise entre deux phases d'alimentation en courant.

2. Procédé selon la revendication 1, **caractérisé en ce que** l'enveloppante (3) de la contre-tension d'induction (2) est au moins approximativement une droite.

3. Procédé selon la revendication 2, **caractérisé en ce que** le passage par zéro est déterminé à partir du gradient de la droite (5).

4. Procédé selon la revendication 3, **caractérisé en ce que** la vitesse de rotation du moteur et l'angle de rotor sont déterminés à partir du passage par zéro ou du gradient.

5. Procédé selon l'une des revendications 1 à 4, **caractérisé en ce que** la modulation (PWM) de la largeur des impulsions de l'alimentation en courant est modifiée de telle sorte que le passage par zéro de la contre-tension d'induction (2) soit situé au milieu des pauses d'alimentation en courant.

6. Procédé selon l'une des revendications 1 à 5, **caractérisé en ce que** la largeur de la modulation de la largeur des impulsions est adaptée.

7. Procédé selon l'une des revendications 1 à 6, **caractérisé en ce qu'**il utilise un courant polyphasé en en ce que la mesure de la contre-tension d'induction (2) ne s'effectue qu'après que le courant de la phase concernée n'atteint plus une valeur limite.

8. Procédé selon l'une des revendications 1 à 7, **caractérisé en ce que** la mesure de la contre-tension d'induction (2) ne s'effectue que sur une partie des intervalles entre alimentations en courant.

9. Appareil de régulation et de commande permettant la mise en oeuvre du procédé selon l'une des revendications 1 à 8.

10. Moteur électrique, en particulier dans un véhicule ou un ensemble moteur d'un véhicule, présentant un appareil de régulation et de commande selon la revendication 9.
